# EUROPÄISCHE PATENTSCHRIFT

(11) **EP 3 174 764 B1**
(45) Veröffentlichungstag und Bekanntmachung des Hinweises auf die Patenterteilung: **01.05.2019**
(21) Anmeldenummer: 15741991.2
(22) Anmeldetag: 22.07.2015
(51) Int. Cl.: B60S 1/04

(54) **SCHEIBENWISCHERANORDNUNG**
WINDSHIELD WIPER ASSEMBLY
SYSTÈME D'ESSUIE-GLACE

(30) Priorität: 30.07.2014 DE 102014214985
(43) Veröffentlichungstag der Anmeldung: 07.06.2017
(73) Patentinhaber: Volkswagen Aktiengesellschaft, 38440 Wolfsburg (DE)
(72) Erfinder: JUNGGEBAUER, Jens, 38104 Braunschweig (DE); KULINNA, Hans-Jürgen, 29392 Wesendorf (DE)
(86) Internationale Anmeldenummer: PCT/EP2015/066808
(87) Internationale Veröffentlichungsnummer: WO 2016/016067

(56) Entgegenhaltungen:
- EP-A1- 1 552 994
- DE-A1- 10 242 298
- DE-U1-202008 005 744
- FR-A1- 2 853 606
- FR-A1- 2 885 099
- FR-A1- 2 947 786
- JP-A- S6 042 121

## Beschreibung

Die Erfindung betrifft eine Scheibenwischeranordnung für ein Fahrzeug, insbesondere Kraftfahrzeug, mit einer Antriebseinrichtung, die einen Elektromotor mit einem Poltopf und ein von dem Elektromotor antreibbares Getriebe, das mit mindestens einem Wischerarm wirkverbunden/wirkverbindbar ist, aufweist, und mit einer Einrichtung zur Befestigung der Antriebseinrichtung an dem Fahrzeug.

Scheibenwischeranordnungen der Eingangs genannten Art sind aus dem Stand der Technik bereits bekannt. So offenbart beispielsweise die Offenlegungsschrift DE 102 42 298 A1 eine Scheibenwischeranordnung, bei welcher drei Anbindungsstellen zur Befestigung an einem Fahrzeug vorgesehen sind. Eine dieser Anbindungsstellen ist dabei einem Poltopfende des Elektromotors zugeordnet und mit einem Entkopplungselement zur Vibrationsentkopplung versehen. Dabei ist das Entkopplungselement dem Poltopfende und somit einer Stirnseite des Poltopfes zugeordnet. Aus der Gebrauchsmusterschrift DE 20 2008 005 744 U1 ist außerdem ein Elektromotor bekannt, der durch eine Manschette in einem Fahrzeug befestigbar ist. Die Manschette nimmt dabei ein (axiales) Poltopfende des Elektromotors auf, so dass der Elektromotor ähnlich wie in der zuvor genannten Druckschrift an dem Poltopfende gelagert ist.

Aus den Offenlegungsschriften FR 2 853 606 A1 und FR 2 947 786 A1 sind außerdem bereits Scheibenwischeranordnungen bekannt, die eine dem Poltopf zugeordnete Befestigungslasche aufweisen, die mit einem freien Ende am Fahrzeug befestigbar ist.

Aus der Offenlegungsschrift JP S60 42121 A geht eine Scheibenwischeranordnung mit den Merkmalen des Oberbegriffs des Anspruchs 1 hervor. Dabei ist einem freien Ende einer Befestigungslasche dieser Scheibenwischeranordnung ein Vibrationsentkopplungselement zugeordnet.

Der Erfindung liegt die Aufgabe zugrunde eine Scheibenwischeranordnung für ein Fahrzeug zu schaffen, die bei zumindest gleichbleibender Belastbarkeit der Anbindung der Scheibenwischeranordnung an ein Fahrzeug eine verbesserte Vibrationsentkopplung zu dem Fahrzeug ermöglicht.

Die der Erfindung zugrundeliegende Aufgabe wird durch eine Scheibenwischeranordnung mit den Merkmalen des Anspruchs 1 gelöst. Diese hat den Vorteil, dass eine größere Fläche genutzt wird, über welche Kräfte und damit Vibrationen an der Anbindungsstelle aufgenommen
und gedämpft beziehungsweise entkoppelt werden. Dies wird erfindungsgemäß dadurch erreicht, dass die Einrichtung eine den Poltopf des Elektromotors umfangsseitig zumindest bereichsweise umgreifende Lasche aufweist, die ein freies, von dem Poltopf abstehendes und an dem Fahrzeug befestigbares/befestigtes Ende aufweist. Dadurch, dass die Lasche den Poltopf umfangsseitig umgreift, kann die gesamte Poltopflänge und gegebenenfalls Breite dazu genutzt werden, um Kräfte von dem Poltopf in die Lasche und damit in das Fahrzeug abzuleiten. Aufgrund der großen Kontaktfläche können Vibrationen daher besonders vorteilhaft kompensiert beziehungsweise entkoppelt werden. Gleichzeitig wird eine sichere Befestigung des Poltopfes beziehungsweise des Elektromotors und damit der Scheibenwischeranordnung an dem Fahrzeug gewährleistet. Vorzugsweise sind wie üblich mehrere Anbindungsstellen für die Scheibenwischeranordnung an dem Fahrzeug vorgesehen, wobei eine Anwendungsstelle durch die zuvor beschriebene Einrichtung und die anderen Anbindungsstellen auf herkömmliche Art und Weise zur Verfügung gestellt werden. Insbesondere ist vorgesehen, dass die beiden verbleibenden Anbindungsstellen nicht dem Elektromotor, sondern dem Getriebe, insbesondere einem Getriebegehäuse des Getriebes zugeordnet sind.

Gemäß einer vorteilhaften Weiterbildung der Erfindung ist vorgesehen, dass sich die Lasche über den Umfang des Poltopfes um mindestens 25°, insbesondere um mindestens 45°, vorzugsweise um 90° erstreckt. Die Lasche umgreift somit mindestens einen Umfangsabschnitt des Poltopfes. Dadurch wird eine vorteilhafte Lagerung des Poltopfes gewährleistet. Durch die Anlage der Lasche an dem Poltopf wird außerdem bevorzugt eine Wärmeableitung in das Fahrzeug zur Verfügung gestellt.

Vorzugsweise ist die Lasche zumindest abschnittsweise vibrationsdämpfend ausgebildet. Dadurch werden Vibrationen bereits durch die Lasche gedämpft. Insbesondere ist die Lasche dazu zumindest abschnittsweise elastisch verformbar ausgebildet, wobei die Elastizitätskonstante derart gewählt ist, dass eine vorteilhafte Vibrationsentkopplung erfolgt. Die Dämpfungswirkung wird zweckmäßigerweise auch durch die Breite und Dicke der Lasche sowie den Laschenverlauf beeinflusst. Insbesondere ist vorgesehen, dass sich die Lasche von dem freien, zur Befestigung an dem Fahrzeug dienenden Ende zu dem den Poltopf umgreifenden Abschnitt gekrümmt verläuft.

Ferner ist erfindungsgemäß vorgesehen, dass die Lasche wenigstens eine Versteifungsrippe aufweist. Dadurch ist es mit Vorteil möglich, auch bei einer verhältnismäßig niedrigen/geringen Materialstärke der Lasche eine ausreichende Dämpfungswirkung zur Vibrationsentkopplung zu erreichen. Darüber hinaus wird die Stabilität und Robustheit der Befestigung der Scheibenwischeranordnung an dem Fahrzeug erhöht.

Bevorzugt ist dabei vorgesehen, dass sich die Versteifungsrippe entlang eines Randabschnitts der Lasche erstreckt. Dadurch wird die Versteifung insbesondere im Randbereich erhöht.

Vorzugsweise erstreckt sich die Versteifungsrippe von dem dem Poltopf zugewandten Ende der Lasche entlang des Rands der Lasche, um das freie, zur Befestigung dienende Ende herum zurück bis zu dem dem Poltopf zugeordneten Ende der Lasche. Hierdurch wird eine besonders vorteilhafte Dämpfungswirkung und Robustheit der Scheibenwischeranordnung gewährleistet.

Zweckmäßigerweise ist dabei das freie Ende der Lasche mit einer Krümmung versehen, so dass auch die Versteifungsrippe gekrümmt verläuft. Vorzugsweise ist die Versteifungsrippe durch einen Umformprozess der Lasche hergestellt. Insbesondere ist die Lasche als Stanz-Biege-Bauteil ausgebildet, das in einem Bearbeitungsschritt in die gewünschte Form mit der gebogenen Versteifungsrippe gebracht wird. Die Lasche ist zweckmäßigerweise aus einem Metall gefertigt. Alternativ ist die Lasche gemäß einer weiteren Ausführungsform aus Kunststoff gefertigt, wobei in beiden Fällen, also unabhängig von dem Material, Versteifungsrippen oder die Versteifungsrippe bevorzugt einstückig mit der Lasche ausgebildet sind/ist.

Gemäß einer vorteilhaften Weiterbildung der Erfindung ist weiterhin vorgesehen, dass die Lasche an dem Poltopf stoffschlüssig befestigt ist. Hierzu ist die Lasche beispielsweise an einem Gehäuse des Poltopfes verklebt oder verschweißt. Hierdurch ist eine besonders einfache Befestigung der Lasche an dem Poltopf gewährleistet, die darüber hinaus einen guten Anlagekontakt der Lasche an dem Poltopf gewährleistet.

Weiterhin ist bevorzugt vorgesehen, dass die Lasche an dem Poltopf formschlüssig befestigt ist. Dazu kann die Lasche den Poltopf beispielsweise derart weit umgreifen, dass eine formschlüssige Verbindung hergestellt wird. Hierdurch wird insbesondere der Vorteil einer zerstörungsfrei arretierbaren Verbindung geschaffen. Weiterhin ist es denkbar, die Lasche an dem Poltopf durch wenigstens eine Rasteinrichtung zu arretieren. Dazu können beispielsweise an dem Gehäuse des Poltopfes Rastaufnahmen vorgesehen sein, die mit Rastnasen der Lasche entsprechend zusammenwirken. Alternativ oder zusätzlich ist bevorzugt vorgesehen, dass die Lasche an dem Poltopf, insbesondere an dem Gehäuse des Poltopfes verschraubt ist.

Gemäß einer bevorzugten Weiterbildung der Erfindung ist vorgesehen, dass der Poltopf ein Gehäuse aufweist, wobei ein Gehäuseabschnitt des Gehäuses von der Lasche gebildet wird.

Da die Lasche den Poltopf umfangsseitig umgreift, wird also ein Mantelwandabschnitt des Gehäuses des Poltopfes durch die Lasche gebildet. Hierdurch ergibt sich eine vorteilhafte Integration der Lasche beziehungsweise der Einrichtung zur Befestigung des Poltopfes an dem

Fahrzeug in den Poltopf. Hierdurch werden die Teileanzahl sowie die Montage und Herstellungsaufwand verringert.

Weiterhin ist erfindungsgemäß vorgesehen, dass dem freien Ende der Lasche, das zur Befestigung der Lasche an dem Fahrzeug dient, ein Entkoppelelement zur Vibrationsentkopplung zugeordnet ist. Hierdurch wird eine zusätzliche Vibrationsentkopplung zur Verfügung gestellt, die die Vibrationsdämpfung der Lasche unterstützt. Vorzugsweise weist das Entkopplungselement wenigstens ein Elastomerelement zur Dämpfung auf. Vorzugsweise ist das Entkopplungselement als Ringelement ausgebildet, das an dem freien Ende von einer die Lasche an dem Fahrzeug befestigenden Schraube durchdrungen wird, so dass es zwischen Schraubenkopf und Befestigungslasche oder zwischen Befestigungslasche und Fahrzeug verspannt ist.

Gemäß einer weiteren Ausführungsform der Erfindung ist bevorzugt vorgesehen, dass sich die Lasche um 170° bis 190°, insbesondere 180° um den Umfang des Poltopfes erstreckt. Dadurch wird der Poltopf insgesamt an seiner von dem Fahrzeug wegweisenden Seite von der zumindest einen Lasche umgriffen. Die Lasche weist dazu beispielsweise einen - im Längsschnitt gesehen - im Wesentlichen halbkreisförmigen, den Poltopf umgreifenden Abschnitt und einen insbesondere senkrecht vom Poltopf abstehenden, das freie Ende der Lasche aufweisenden Abschnitt auf. Zweckmäßigerweise ist in jedem Fall der den Poltopf umgreifende Abschnitt der Lasche in seiner Kontur der Kontur des Poltopfes beziehungsweise der Mantelwand des Poltopfes angepasst, so dass ein möglichst großer Flächenkontakt zwischen Lasche und Poltopf gewährleistet ist.

Im Folgenden soll die Erfindung anhand eines Ausführungsbeispiels näher erläutert werden. Dazu zeigen:
- Figur 1: eine Scheibenwischeranordnung in einer perspektivischen Darstellung,
- Figur 2: eine Draufsicht auf die Scheibenwischeranordnung und
- Figur 3: eine Seitenansicht der Scheibenwischeranordnung.

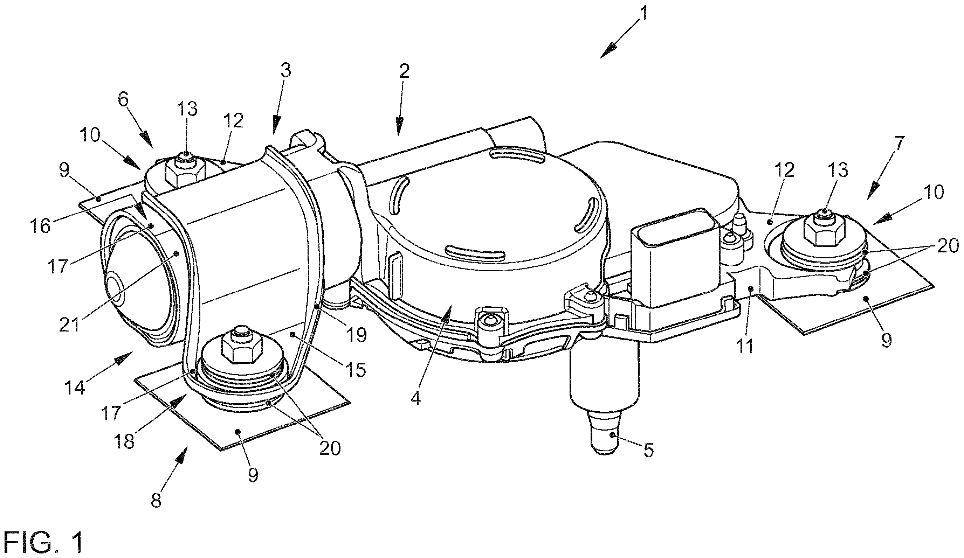

Figur 1 zeigt in einer perspektivischen Darstellung ein Ausführungsbeispiel einer vorteilhaften Scheibenwischeranordnung 1. Die Scheibenwischeranordnung 1 weist eine Antriebseinrichtung 2 auf, die im Wesentlichen von einem Elektromotor 3 und einem durch den Elektromotor 3 antreibbaren Getriebe 4 gebildet wird. Eine Antriebswelle 5 des Getriebes, das vorliegend als Schneckenradgetriebe ausgebildet ist, bildet eine Antriebswelle eines Wischerarms der Scheibenwischeranordnung 1 oder ist mit einer entsprechenden Antriebswelle wirkverbunden beziehungsweise wirkverbindbar.

Die Scheibenwischeranordnung 1 ist durch drei Anbindungsstellen 6, 7 und 8 an einem Fahrzeug 9, das hier nur durch den Bereich der Anbindungsstellen 6, 7, 8 dargestellte Flächenelemente 9 angedeutet ist, befestigt. Die Anbindungsstellen 6, 7 sind dabei auf herkömmliche Art und Weise ausgebildet. Dazu weisen die Anbindungsstellen 6, 7 jeweils eine Verschraubung 10 auf, die eine Entkopplungseinrichtung umfasst. Die Anbindungsstellen 6, 7 sind dabei einem Getriebegehäuse 11 des Getriebes 4 zugeordnet. Wobei das Getriebegehäuse 11 diametral gegenüberliegend jeweils ein Befestigungsflansch 12 aufweist, an welchem die jeweilige Anbindungsstelle 6, 7 vorgesehen ist. Dabei durchdringt eine Schraube 13 den jeweiligen Befestigungsflansch 12, um zwischen dem Befestigungsflansch 12 und dem Fahrzeug 9 sowie zwischen einer Schraubenmutter und dem Befestigungsflansch jeweils ein Entkopplungselement 20 in Form eines Elastomerringes zur Vibrationsentkopplung zu verspannen.

Die Anbindungsstelle 8 unterscheidet sich von den Anbindungsstellen 6, 7 durch eine Einrichtung 14, die eine im Wesentlichen biegesteife Lasche 15 zur Befestigung des Elektromotors 3 an dem Fahrzeug 9 aufweist. Die Lasche 15 ist dabei einem Poltopf 16 des Elektromotors 3 zugeordnet.

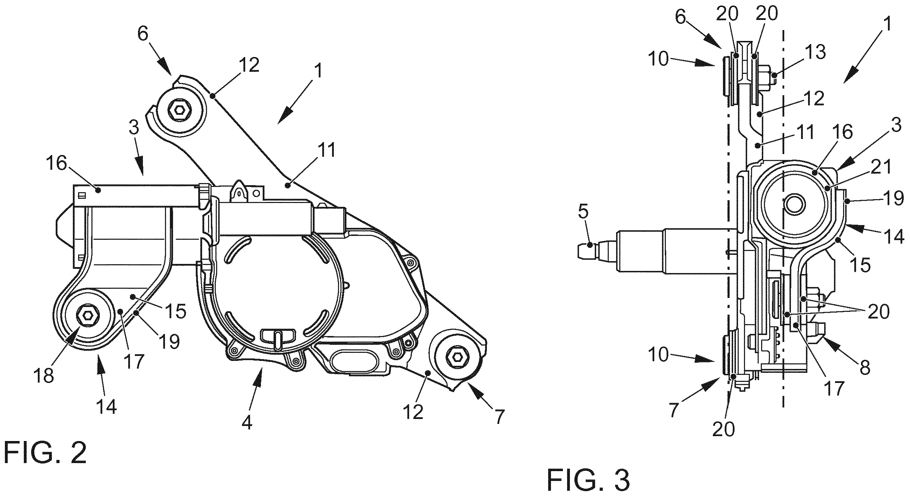

Figur 2, in welcher die Scheibenwischeranordnung in einer Draufsicht dargestellt ist, und Figur 3, in welcher die Scheibenwischeranordnung in einer Seitenansicht dargestellt ist, zeigen dabei deutlich, dass sich die Lasche 15 um etwa 90° des Umfangs des Poltopfes 6 erstreckt und ein freies, von dem Poltopf 16 abstehendes beziehungsweise wegweisendes Ende 17 aufweist, das durch eine Verschraubung 18 mit dem Fahrzeug 9 verbunden ist. Die Verschraubung 18 entspricht dabei in dem vorliegenden Ausführungsbeispiel der jeweiligen Verschraubung der Anbindungsstellen 6 und 7, mit zwei zwischen Lasche und Schraubenmutter beziehungsweise zwischen Lasche und Fahrzeug 9 verspannten Entkoppelelementen 20. In der Seitenansicht gemäß Figur 3 weist die Lasche 15 eine geschwungene, insbesondere nahezu S-förmige Kontur auf, so dass das freie Ende 17 der Lasche 15 im Wesentliche auf Höhe der Drehachse beziehungsweise der Zentralachse des Poltopfes 16 beziehungsweise des Elektromotors 3 liegt. Im Bereich des Poltopfes 16 entspricht die Kontur der Lasche 15 der Mantelaußenfläche beziehungsweise Außenkontur des Poltopfes 16, so dass die Lasche 15 den Poltopf 15 in etwa 45° umgreift und an diesem anliegt. Dabei ist die Lasche 15 vorteilhafterweise an dem Poltopf 16 verklebt.

Im Betrieb werden von dem Poltopf 16 Vibrationen in die Lasche 15 übertragen, wobei die Lasche 15 aufgrund ihrer geschwungenen Form bereits dämpfend auf die Vibrationen wirkt. Die Verschraubung 18 mit der zusätzlichen Vibrationsentkopplung dämpft die noch verbleibenden Vibrationen, so dass kaum Vibrationen in das Fahrzeug 9 eingeleitet werden, die den Fahrkomfort für Insassen des Fahrzeugs durch störende Geräusche oder dergleichen stören könnten.

Die Lasche 15 ist in dem vorliegenden Ausführungsbeispiel aus einem Metall gefertigt und als Stanz-Biege-Blechteil ausgebildet. Zur Erhöhung der Dämpfwirkung sowie zum Erhöhen der Robustheit weist die Lasche 15 eine Versteifungsrippe 19 auf, wie sie insbesondere in Figur 1 ersichtlich ist. Die Versteifungsrippe 19 erstreckt sich entlang des Rands der Lasche 15. Dabei ist vorgesehen, dass sich die Versteifungsrippe 19 entlang des Rands von dem Poltopf 16 bis zu der Anbindungsstelle 8 beziehungsweise um das freie Ende 17 herum zurück bis zu dem Poltopf 16, also bis zu dem dem freien Ende 17 gegenüberliegenden Ende erstreckt. Die Versteifungsrippe 19 ist insbesondere durch den Biegeprozess hergestellt.

Gemäß einer alternativen Ausführungsform kann vorgesehen sein, dass die Lasche 15 insgesamt aus einem Kunststoffmaterial hergestellt ist. Auch kann vorgesehen sein, dass die Lasche den Poltopf 16 um etwa 180° umgreift, um eine noch höhere Belastbarkeit der Befestigung zu gewährleisten. Auch ist es denkbar, und bevorzugt vorgesehen, dass die Lasche 15 als Teil eines Gehäuses 21 des Poltopfes 16 ausgebildet ist, so dass insbesondere ein Gehäusemantelwandabschnitt des Gehäuses 21 beziehungsweise des Poltopfes 16 durch die Lasche 15 gebildet wird. Dadurch erfolgt eine vorteilhafte Integration der Lasche 15 in den Poltopf 16.

Durch das Vorsehen der Lasche 15 wird außerdem erreicht, dass für die Anbindungsstellen 6, 7, 8 unterschiedliche Befestigungsebenen auf einfache Art und Weise vorgesehen werden können, wie in Figur 3 ersichtlich, in welcher die Anbindungsstellen 6, 7 in einer Ebene und die Anbindungsstelle 8 in einer davon beabstandeten zweiten Ebene liegen.

## Patentansprüche

1. Scheibenwischeranordnung (1) für ein Fahrzeug (9), mit einer Antriebseinrichtung (2), die einen Elektromotor (3) mit einem Poltopf (16) und ein von dem Elektromotor (3) antreibbares Getriebe (4), das mit mindestens einem Wischerarm wirkverbunden/wirkverbindbar ist, aufweist, und mit einer Einrichtung (14) zur Befestigung der Antriebseinrichtung (2) an dem Fahrzeug (9), wobei die Einrichtung (14) eine den Poltopf (16) des Elektromotors (3) umfangsseitig zumindest bereichsweise umgreifende Lasche (15) aufweist, die ein freies, von dem Poltopf (16) abstehendes und an dem Fahrzeug (9) befestigbares/befestigtes Ende (17) aufweist, wobei dem freien Ende (17) der Lasche (15) ein Entkopplungselement (20) zur Vibrationsentkopplung zugeordnet ist, **dadurch gekennzeichnet, dass** die Lasche (15) wenigstens eine Versteifungsrippe (19) aufweist.

2. Scheibenwischeranordnung nach Anspruch 1, **dadurch gekennzeichnet, dass** sich die Lasche (15) über mindestens 25° entlang des Umfangs des Poltopfes (16) erstreckt.

3. Scheibenwischeranordnung nach einem der vorhergehenden Ansprüche, **dadurch gekennzeichnet, dass** die Lasche (15) zumindest abschnittsweise vibrationsdämpfend ausgebildet ist.

4. Scheibenwischeranordnung nach einem der vorhergehenden Ansprüche, **dadurch gekennzeichnet, dass** sich die Versteifungsrippe (19) entlang eines Randabschnitts der Lasche (15) erstreckt.

5. Scheibenwischeranordnung nach einem der vorhergehenden Ansprüche, **dadurch gekennzeichnet, dass** die Lasche (15) an dem Poltopf (16) stoffschlüssig befestigt ist.

6. Scheibenwischeranordnung nach einem der vorhergehenden Ansprüche, **dadurch gekennzeichnet, dass** die Lasche (15) an dem Poltopf (16) formschlüssig befestigt ist.

7. Scheibenwischeranordnung nach einem der vorhergehenden Ansprüche, **dadurch gekennzeichnet, dass** der Poltopf (16) ein Gehäuse (17) aufweist, wobei ein Gehäusemantelwandabschnitt des Gehäuses (17) von der Lasche (15) gebildet wird.

8. Scheibenwischeranordnung nach einem der vorhergehenden Ansprüche, **dadurch gekennzeichnet, dass** sich die Lasche über 170° bis 190°, insbesondere 180° über den Umfang des Poltopfes (16) erstreckt.

## Claims

1. Windscreen wiper assembly (1) for a vehicle (9), with a drive device (2), which has an electric motor (3) with a pole pot (16) and a gearing (4) which is drivable by the electric motor (3) and is operatively connected/operatively connectable to at least one wiper arm, and with a device (14) for fastening the drive device (2) to the vehicle (9), wherein the device (14) has a tab (15) which engages at least in regions on the circumferential side around the pole pot (16) of the electric motor (3) and has a free end (17) which protrudes from the pole pot (16) and is fastenable/fastened to the vehicle (9), wherein the free end (17) of the tab (15) is assigned a decoupling element (20) for decoupling vibrations, **characterized in that** the tab (15) has at least one stiffening rib (19).

2. Windscreen wiper assembly according to Claim 1, **characterized in that** the tab (15) extends over at least 25° along the circumference of the pole pot (16) .

3. Windscreen wiper assembly according to either of the preceding claims, **characterized in that** the tab (15) is of vibration-damping design at least in sections.

4. Windscreen wiper assembly according to one of the preceding claims, **characterized in that** the stiffening rib (19) extends along an edge portion of the tab (15).

5. Windscreen wiper assembly according to one of the preceding claims, **characterized in that** the tab (15) is fastened to the pole pot (16) in an integrally bonded manner.

6. Windscreen wiper assembly according to one of the preceding claims, **characterized in that** the tab (15) is fastened to the pole pot (16) in an interlocking manner.

7. Windscreen wiper assembly according to one of the preceding claims, **characterized in that** the pole pot (16) has a housing (17), wherein a housing casing wall portion of the housing (17) is formed by the tab (15) .

8. Windscreen wiper assembly according to one of the preceding claims, **characterized in that** the tab extends over 170° to 190°, in particular 180° over the circumference of the pole pot (16).

## Revendications

1. Système d'essuie-glace (1) pour un véhicule (9), comprenant un dispositif d'entraînement (2) qui présente un moteur électrique (3) avec un boîtier polaire (16) et une transmission (4) pouvant être entraînée par le moteur électrique (3), qui est/peut être en liaison fonctionnelle avec au moins un bras d'essuie-glace, et comprenant un dispositif (14) pour fixer le dispositif d'entraînement (2) au véhicule (9), le dispositif (14) présentant une patte (15) venant en prise sur la périphérie au moins en partie autour du boîtier polaire (16) du moteur électrique (3), qui présente une extrémité libre (17) faisant saillie depuis le boîtier polaire (16) et fixée/pouvant être fixée au véhicule (9), un élément de désaccouplement (20) pour le désaccouplement des vibrations étant associé à l'extrémité libre (17) de la patte (15), **caractérisé en ce que** la patte (15) présente au moins une nervure de renforcement (19) .

2. Système d'essuie-glace selon la revendication 1, **caractérisé en ce que** la patte (15) s'étend sur au moins 25° le long de la périphérie du boîtier polaire (16).

3. Système d'essuie-glace selon l'une quelconque des revendications précédentes, **caractérisé en ce que** la patte (15) est réalisée de manière à amortir au moins en partie les vibrations.

4. Système d'essuie-glace selon l'une quelconque des revendications précédentes, **caractérisé en ce que** la nervure de renforcement (19) s'étend le long d'une portion de bord de la patte (15).

5. Système d'essuie-glace selon l'une quelconque des revendications précédentes, **caractérisé en ce que** la patte (15) est fixée par liaison de matière au boîtier polaire (16).

6. Système d'essuie-glace selon l'une quelconque des revendications précédentes, **caractérisé en ce que** la patte (15) est fixée par engagement par correspondance de formes au boîtier polaire (16).

7. Système d'essuie-glace selon l'une quelconque des revendications précédentes, **caractérisé en ce que** le boîtier polaire (16) présente un boîtier (17), une portion de paroi d'enveloppe de boîtier du boîtier (17) étant formée par la patte (15).

8. Système d'essuie-glace selon l'une quelconque des revendications précédentes, **caractérisé en ce que** la patte s'étend sur 170° à 190°, en particulier sur 180° sur la périphérie du boîtier polaire (16) .
